(19) Europäisches Patentamt

European Patent Office

Office européen des brevets

(11) **EP 0 555 746 B1**

(12) **EUROPÄISCHE PATENTSCHRIFT**

(45) Veröffentlichungstag und Bekanntmachung des Hinweises auf die Patenterteilung:
**10.09.1997  Patentblatt 1997/37**

(51) Int. Cl.$^6$: **B01D 53/56**

(21) Anmeldenummer: **93101624.0**

(22) Anmeldetag: **03.02.1993**

(54) **Vorrichtung zur katalytischen NOX-Reduktion**

Device for catalytic NOx reduction

Dispositif pour la réduction catalytique de NOx

(84) Benannte Vertragsstaaten:
**AT BE CH DE DK ES FR GB IT LI NL SE**

(30) Priorität: **10.02.1992 DE 4203807**

(43) Veröffentlichungstag der Anmeldung:
**18.08.1993  Patentblatt 1993/33**

(73) Patentinhaber:
**MAN Nutzfahrzeuge Aktiengesellschaft
80976 München (DE)**

(72) Erfinder:
- **Jacob, Eberhard, Dr. Dipl.-Chem.
  W-8132 Tutzing (DE)**
- **Kreutmair, Josef, Dipl.-Ing. (FH)
  W-8068 Pfaffenhofen (DE)**

(56) Entgegenhaltungen:
EP-A- 0 468 919          WO-A-92/02291
DE-A- 3 729 994          DE-A- 3 830 045
DE-A- 4 032 085          DE-A- 4 038 054
US-A- 3 716 344

**Beschreibung**

Die Erfindung betrifft eine Vorrichtung zur katalytischen $NO_x$-Reduktion.

Nachfolgend wird auf die der Erfindung zugrunde liegende Problematik und auf den Stand der Technik eingegangen.

Die Verwendung von Harnstoff als Reduktionsmittel für die selektive, katalytische Reduktion (SCR) von Stickoxiden in sauerstoffhaltigen Abgasen ist in der EP 0 487 886 B1 der Anmelderin, Priorität vom 29.11.1990, Veröffentlichungstag 03.06.92, beschrieben. Die Zeitschrift, SAE paper 900 496 (1990), Seiten 13 bis 19, beschreibt ähnliche Verwendungen.

Mit dem Harnstoff wird die Verwendung des giftigen und intensiv riechenden Ammoniaks und damit die Mitführung von Ammoniak bei Kraftfahrzeugen und die Lagerung von Ammoniak, die entsprechende Sicherheitsvorkehrungen erfordern, vermieden.

Bekannterweise wird die Harnstofflösung, unter Umständen vorgewarmt, direkt in die Abgasleitung vor dem Reduktionskatalysator (SCR-Katalaysator) eingesprüht. Bei dieser Verfahrensweise bilden sich unerwünschte Reaktionsprodukte. Bei der Harnstoff-Thermolyse zersetzt sich der Harnstoff unter Gasentwicklung ($NH_3$, HNCO) zur unschmelzbaren Cyanursäure (Cns) und anderen festen Produkten, wenn es über den Schmelzpunkt (133°C) erhitzt wird. Harnstoff sublimiert beim Erhitzen auf 130° bis 205°C unter teilweiser Zersetzung zu $NH_3$ und der reaktiven Isocyansäure, HNCO. Im Rückstand verbleiben Biuret, Cns und Ammelid. Die Bildung von Cns, Ammelid und anderen Stoffen ist für eine Vergasung des Harnstoffes sehr hinderlich, da aus dem festen Harnstoff zunächst flüssiger Harnstoff, dann jedoch wieder feste, unschmelzbare Stoffe entstehen.

Gemäß der EP 0487 886 B1 wird dem dadurch Rechnung getragen, daß die Harnstofflösung mittels einer Sprühdüse auf einen Hydrolysekatalysator fein versprüht wird. Damit wird erreicht, daß eine quantitative Umwandlung des Harnstoffes durch Hydrolyse zu $NH_3$ und $CO_2$ über den für das SCR-Verfahren wichtigen Temperaturbereich von 180° bis 550°C ermöglicht wird.

Der Erfindung liegt die Aufgabe zugrunde, die Vorrichtung gemäß EP 0 487 886 B1 dahingehend weiter zu entwikkeln, daß eine für den Fahrzeugeinbau notwendige Verringerung des Raumbedarfs der Abgasnachbehandlungseinrichtung erfolgen muß, wobei die quantitative Umsetzung des Harnstoffes zu $NH_3$ und $CO_2$ sicherzustellen ist.

Unter quantitativer Umsetzung ist ein Wirkungsgrad von >99,9% zu verstehen, um ein nennenswertes Auftreten folgender unerwünschter Nebeneffekte zu vermeiden:

- Harnstoffablagerungen am Katalysatoreintritt,
- Beläge auf dem nachgeschalteten SCR-Katalysator (unkontrollierbare Speichereffekte); Polymerbeläge, gebildet aus unverbrannten Kohlenwasserstoffen,
- Schlupf von Harnstoff und harnstoffgenerierten Partikeln (Cyanursäure u. a.),
- Bildung von Isocyansäure, HNCO.

Die Aufgabe wird erfindungsgemäß mit den Merkmalen des Anspruches 1 gelöst.

Durch den erfindungsgemäßen Verdampfer, der Strömungsmischer und Hydrolysegerät als eine Baueinheit ist, wird ein Wirkungsgrad von mindestens 99,9% erreicht und damit das Auftreten der oben aufgelisteten Nebeneffekte vermieden. Dabei ist die Baugröße des Verdampfers fahrzeuggeeignet.

Gemäß einer Ausgestaltung der Erfindung ist der Verdampfer mit dünnen, nicht geradlinigen Kanälen ausgestattet, die über Schlitze oder kleine Öffnungen untereinander in strömungstechnischer Verbindung stehen. Durch diese Ausbildung wird der aus der Düse kommende Harnstofflösungsnebel in eine Vielzahl von Strömungsfäden aufgeteilt, die innerhalb des Verdampfers umgelenkt, teilweise zusammengeführt und wieder getrennt werden. Auf die Weise wird sichergestellt, daß der Harnstofflösungsnebel möglichst rasch in Kontakt mit der wärmeübertragenden Wandung der Kanäle kommt. Durch die Verbindungen zwischen Kanälen sind auch Teilquerströmungen möglich, die durch Druckunterschiede innerhalb von benachbarten Kanälen verursacht werden. Die Querströmungen sorgen für eine gleichmäßige Verteilung des Nebel- bzw. Dampfstromes auf den gesamten Querschnitt des Verdampfers und des anschließenden SCR-Katalysators.

Aus der EP-A-0 468 919 ist zwar ein Mischer für Gasströmungen vorgesehen, der jedoch nicht mit einer katalytisch aktiven Beschichtung gecoated ist.

Durch die vorbeschriebene Ausgestaltung des Verdampfers gemäß der Erfindung wird erfolgreich verhindert, daß Tröpfchen der Harnstofflösung durch den Verdampfer schlüpfen.

Der Trägerkörper des Verdampfers besteht vorzugsweise aus Metall mit hoher Wärmeleitfähigkeit, wobei die Kanäle durch sehr dünne Metallwandungen voneinander getrennt sind, die Schlitze oder Bohrungen für die Querströmungen aufweisen. Die Metallwandungen erlauben eine rasche Wärmezufuhr zum Auftreffpunkt eines Lösungströpfchens und damit zur Verdampfung der Tröpfchen. Coldspots, wie sie bei Keramik auftreten, werden vermieden.

Der Verdampfer läßt sich vorzugsweise aus einer entsprechend profilierten, dünnen Metallfolie herstellen, die außerdem Schlitze oder Bohrungen aufweist. Die Folie wird dann spiralförmig zur Bildung des Trägerkörpers des Verdampfers aufgerollt und von einem zylindrischen Mantel umgeben. Die Profile sind so gestaltet, daß sie nach dem Aufrollen im wesentlichen axialgerichtete Kanäle bilden, die aber nicht geradlinig verlaufen, sondern Umlenkungen aufweisen, die möglichst in kurzen Abständen, in etwa alle 5 .- 10 mm, erfolgen.

Die Kanäle sowie die Schlitze oder Bohrungen haben vorzugsweise Durchmesser im Bereich von wenigen Millimetern, insbesondere etwa zwischen 1 bis 2 mm.

Gemäß einer weiteren Ausgestaltung der Erfindung sind die Kanalwandungen des Trägerkörpers des Verdampfers mit einem aktiven, hochoberflächigen und offenporigen Material beschichtet. Eine derartige katalytisch aktive Beschichtung fängt die Lösungströpfchen auf und führt die gewünschte quantitative Umwandlung der Harnstofflösung in $NH_3$ und $CO_2$ herbei.

Um die Verdampfung/Hydrolyse ausreichend zu beschleunigen und die Bildung unerwünschter Nebenprodukte zu inhibieren, werden sämtliche mit Harnstofflösungsnebel in Berührung kommenden Bauteile, insbesondere die Katalysatorträgerstruktur, mit feinteiligen anorganischen Oxiden beschichtet. Die anorganischen Oxide müssen bei Temperaturen bis zu 700°C gegenüber dem Abgas von Dieselmotoren resistent sein und ihre Porenstruktur muß über mehrere Tausend Betriebsstunden stabil bleiben. Es werden deshalb Abmischungen von Aluminiumoxid mit Titandioxid, Siliziumdioxid, Zirkoniumdioxid und/oder H-Zeolithen im Gewichtsverhältnis zwischen Aluminiumoxid und den anderen Oxiden von 90 : 10 bis 10 : 90 eingesetzt.

Die Verwendung von H-Zeolith-haltigen Metalloxidabmischungen verleiht dem Verdampfer eine zusätzliche Aktivität für die selektive, katalytische Reduktion von $NO_x$ mit $NH_3$ und erlaubt daher das Volumen des SCR-Katalysators um 10 bis 30% zu reduzieren. Als dieselabgasresistente H-Zeolithe haben sich H-Mordenit, H-ZSM$_5$ und dealuminierte Si-reiche Crack-Katalysatoren bewährt.

Die im Patentanspruch angeführten, feinteiligen Metalloxide sind besonders aktiv, jedoch können diesen noch folgende Trägerstoffe allein oder in Abmischung zugesetzt werden: $Nb_2O_5$, $Ta_2O_5$, $WO_3$, Aluminiumsilikat und weitere Zeolithe, wie dealuminierte Crack-Katalysatoren.

Der Verdampfer ist in der Abgasleitung angeordnet, wo er in Strömungsrichtung vor dem Reduktionskatalysator fixiert wird. Das hat den Vorteil, daß die Wärme für die Verdampfung und Hydrolyse direkt aus dem Abgasstrom genutzt wird. Das Abgas, das dabei ebenfalls durch den Verdampfer strömt, sorgt für den Transport des Harnstofflösungsnebels. Der Verdampfer nimmt vorzugsweise den gesamten Querschnitt der Abgasleitung ein. Es ist aber auch möglich, den Verdampfer kleiner zu dimensionieren und ihn zusätzlich von einem Teilstrom der Abgase umströmen zu lassen, um damit eine Homogenisierung der Temperatur zu erreichen.

Zur Verhinderung von Reduktionsmittelschlupf kann in Strömungsrichtung nach dem Reduktionskatalysator noch ein Oxidationskatalysator vorgesehen werden. Der Verdampfer und die Katalysatoren sind in einem Gehäuse zusammengefaßt, in dem ferner mindestens ein Schalldämpfer integriert ist. Vorteilhaft ist es, wenn in der Abgasleitung vor der Vermischung von Abgas und Harnstofflösung bereits ein Schalldämpfer vorgesehen ist.

In einer weiteren vorteilhaften Ausgestaltung der Erfindung ist einströmseitig vor dem Verdampfer eine Aufbereitungskammer angeordnet, die aus Leitblechen und einer Sprühdüse besteht und eine möglichst gleichmäßige Aufteilung des Harnstofflösungsnebels auf den Querschnitt des Verdampfers sicherstellt. Die Leitbleche können beispielsweise so gestaltet sein, daß sie den Abgasstrom wirbelartig auf den Harnstofflösungsnebel auftreffen lassen, so daß bereits vor dem Verdampfer eine starke Vermischung und damit eine gute Aufteilung der Lösungströpfchen erfolgt.

Als Sprühdüse wird eine Druckzerstäuberdüse vorgeschlagen, die an eine längere Emulgierleitung angeschlossen ist, an derem anderen Ende eine Druckluftleitung und eine Zufuhrleitung für die Harnstofflösung einmünden, d. h., daß die Druckluftleitung möglichst nah am Lösungsvorratsbehälter in die Harnstoffzufuhrleitung einmündet. Damit kann eine weitgehende Gas-/Lösungs-Mischung noch vor dem Austritt aus der Düse erreicht und eine möglichst feine Vernebelung der Lösung unterstützt werden. Durch die Emulgierleitung, die mit Druckluft und Harnstofflosung gefüllt ist, werden die von einer Dosiereinrichtung verursachten ungleichmäßigen Lösungsvorgaben vergleichmäßigt, so daß an der Druckzerstäuberdüse ein gleichmäßiger Lösungsstrom gewährleistet ist.

Als Vorratsbehälter für die Harnstofflösung dient vorzugsweise ein Druckbehälter, der an das gleiche Druckluftnetz angeschlossen werden kann. Mittels eines pulsweitenmodulierten Magnetventils läßt sich die Harnstofflösungszufuhr in Verbindung mit dem Druckbehälter genau dosieren. Die Verwendung einer gegenüber Harnstoffkristallen anfälligen und außerdem nicht genau regelbaren Pumpe ist dadurch nicht notwendig. Die Regelung des Magnetventils für die Dosierung der Harnstofflösung erfolgt in Abhängigkeit von der Last und der Drehzahl der Verbrennungsmaschine. Auf diese Weise läßt sich der Bedarf an Harnstofflösung genau an die Betriebssituation und $NO_x$-Konzentration im Abgas anpassen, so daß eine Ansammlung von aus der Harnstofflösung umgesetztem Ammoniak im Reduktionskatalysator vermieden und damit ein einwandfreier Betrieb des Reduktionskatalysators gewährleistet ist. Eine Dosierung kann bei Vorhandensein eines $NO_x$-Sensors proportional zum $NO_x$-Massenstrom im Abgas erfolgen.

Die Harnstofflösung wird bei Temperaturen unter 160°C unter Bildung von Nebenprodukten unvollständig in Ammoniak und $CO_2$ umgesetzt. Es wird daher vorgeschlagen, der Dosierregelung eine Temperaturregelung zu überlagern, die bei Unterschreiten einer unteren Abgastemperatur im Bereich der Katalysatoren die Zufuhr von Harnstofflösung vollständig unterbindet.

Um die Ablagerung von Harnstoffkristallen und Zersetzungsprodukten innerhalb des Gehäuses und der darin befindlichen Bauteile zu vermeiden, werden zumindest die mit der Harnstofflösung in Berührung kommenden Bereiche ebenfalls mit einer anorganischen, offenporigen Beschichtung versehen, um die mit den Wänden in Berührung kommenden Tropfen rasch zur Verdampfung und Hydrolyse zu bringen.

In der Zeichnung sind Ausführungsbeispiele gemäß der Erfindung schematisch dargestellt. Es zeigen:

Fig. 1    Ein Abgassystem einer Verbrennungsmaschine mit einem Ausführungsbeispiel,
Fig. 2    ein Detail aus Fig. 1,
Fig. 4 und 5    ein Ausführungsbeispiel einer Einrichtung in der Aufbereitungskammer,
Fig. 6    ein weiteres Beispiel mit Detaildarstellungen und
Fig. 7    ein weiteres Ausführungsbeispiel.

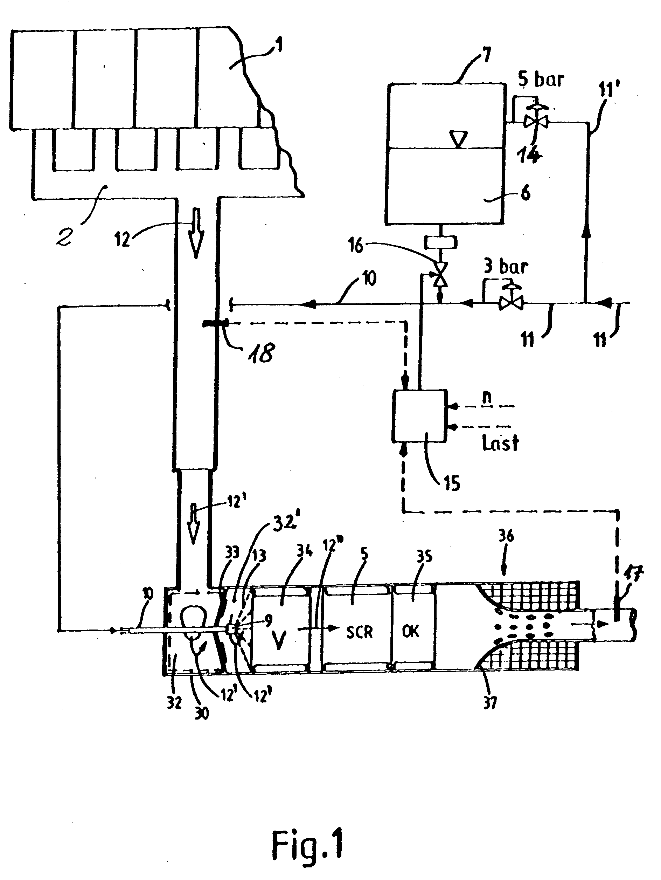

In Fig. 1 ist eine Verbrennungsmaschine 1 mit der zugehörigen Abgasführung 12, 12' gezeigt. Zur Verminderung des Schadstoffes $NO_x$ ist ein Reduktionskatalysator 5 (SCR-Katalysator) vorgesehen. Als Reduktionsmittel wird Ammoniak verwendet, das durch Umsetzung einer Harnstofflösung 6 gewonnen wird. Die Harnstofflösung 6 befindet sich in einem Druckbehälter 7 und wird im Gehäuse 30 unter Nutzung der Wärme aus den Abgasen 12' durch Vermischung, Verdampfung und Hydrolyse in Ammoniak und $CO_2$ umgewandelt. Diese Gase gelangen, vermischt mit den Gasen 12', in den SCR-Katalysator 5.

Für die Umsetzung der Harnstofflösung 6 ist der Verdampfer 34 im Gehäuse 30 in Strömungsrichtung des Abgases 12" vor dem SCR-Katalysator angeordnet. Die Trägerstruktur des Verdampfers 34 besteht aus wärmeleitendem Blech, das gleichzeitige zu einem Strömungsmischer geformt ist, so daß innerhalb des Verdampfers 34 Verwirbelungen und radiale und/oder tangentiale Strömungskomponenten hervorgerufen werden können. Damit soll die Wärmeübertragung auf den Harnstofflösungsnebel 13 möglichst rasch und vollkommen vollzogen werden. Außerdem soll mit der Möglichkeit von Querströmungen eine gleichmäßige Verteilung des Harnstofflösungsnebels 13 sowie der daraus entstehenden Gase über den gesamten Querschnitt des Verdampfers 34 bewirkt werden. In einer Aufbereitungskammer 32, 32' ist eine Druckzerstäuberdüse 9 mittig angeordnet und vom Abgas 12' umströmt. Der Harnstofflösungsnebel 13 wird direkt vom Abgasstrom mitgerissen und in den Verdampfer 34 gebracht.

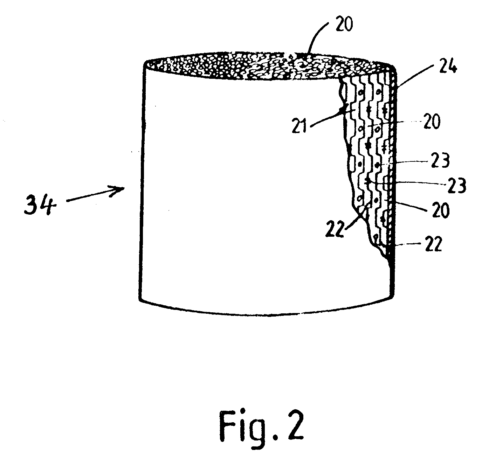

In Fig. 2 ist eine Ausführung eines Verdampfers 34 im Detail gezeigt. Dieser Verdampfer besteht aus einer Vielzahl von im wesentlichen längsgerichteten Kanälen 20. Wie an der Schnittstelle detailliert gezeichnet ist, verlaufen die Kanäle 20 nicht geradlinig, sondern mit Umlenkungen 21, die in kurzen Abständen aufeinanderfolgen. Die Wandungen 22 der Kanäle 20 bestehen aus dünnem Blech, das mit Durchbrüchen oder Bohrungen 23 versehen ist, die Teilströmungen von einem Kanal in den Nachbarkanal zulassen. Die gemäß Fig. 2 in den geraden Abschnitten der Kanäle 20 gezeichneten Durchbrüche 23 können auch in den Umlenkstellen 21 vorgesehen werden, wodurch eine Trennung eines Gasfadens an einer Stelle und die Verbindung von Gasfäden an anderen Stellen noch wirkungsvoller sein kann. Mit dieser Ausführung des Verdampfers 34 soll verhindert werden, daß Lösungströpfchen unverdampft durch den Verdampfer 34 gelangen können, und daß eine möglicherweise ungleichmäßige Verteilung des Lösungsnebels am Eintritt des Verdampfers 34 sich nicht durch den gesamten Verdampfer 34 fortsetzt.

Damit die Hydrolyse im Verdampfer 34 erfolgen kann, sind dessen Kanalwandungen 22 mit einer katalytisch aktiven Beschichtung aus Metalloxiden versehen. Die Aktivkomponenten der Beschichtung sind feinteilige Abmischungen aus Metalloxiden, z. B. Aluminiumoxid ($Al_2O_3$), mit Titandioxid ($TiO_2$), Siliziumdioxid ($SiO_2$), Zirkoniumdioxid ($ZrO_2$), denen noch alleine oder in Abmischung Trägerstoffe, wie Diniobpentoxid ($Nb_2O_5$), Ditantalpentoxid ($Ta_2O_5$), Wolframtrioxid ($WO_3$) und/oder H-Zeolithen zugesetzt werden können, wobei das Gewichtsverhältnis zwischen Aluminiumoxid und den anderen Oxiden etwa von 90 : 10 bis 10 : 90 variieren kann, wobei die Beschichtung der Trägerstruktur in einer Konzentration von 40 - 220 g/l und bevorzugt von 60 - 160 g/l Metalloxidgemisch pro Volumen des Trägers erfolgt. Die Aktivkomponente ist bei einer Raumgeschwindigkeit von über 30.000 $h^{-1}$ mindestens zwischen 240° bis 650°C einsetzbar.

Die Hydrolyse im Verdampfer 34 kommt zum Tragen, wenn die Harnstofflösung 6 als feiner Nebel 13, d. h. mit sehr kleinen Tröpfchen, in die Anlage gelangt. Hierzu ist eine Druckzerstäuberdüse 9 vorgesehen, in die über eine Zufuhrleitung 10 Druckluft und Harnstofflösung 6 gelangt. Die Druckluftleitung 11 mündet so nah wie möglich an den Harnstofflösungsbehälter 7 in die Zufuhrleitung 10 ein, um einen möglichst langen Emulgierweg zu bereiten, der eine ausreichende Vermischung des Druckgases mit der Harnstofflösung 6 gewährleistet. Von der Druckleitung 11 zweigt eine Leitung 11' mit einem Drucksteuerventil 14 für den als Druckbehälter ausgebildeten Harnstofflösungsbehälter 7 ab. Wesentlich bei der quantitativen Umsetzung von Harnstofflösung in Ammoniak und $CO_2$ unter Vermeidung der Bildung von Nebenprodukten ist die sehr rasche Erhitzung der Lösung auf ca. 150°C und eine rasche Hydrolyse. Dieses kann neben den vorstehend beschriebenen Maßnahmen durch weitere Maßnahmen günstig beeinflußt werden, nämlich durch eine Aufbereitungskammer 32, 32', in der die entsprechende Zumischung des Abgases 12' in den Harnstofflösungsnebel 13, erfolgt. Das Abgas 12' wird in diesem Fall tangential in die Aufbereitungskammer 32 eingeführt. Der dadurch hervorgerufene Drall im Abgas wird durch eine Drallscheibe 33 verstärkt, die die Aufbereitungskammer 32 in zwei Bereiche unterteilt. Das Abgas 12' gelangt in die Aufbereitungskammer 32 und strömt dann durch die Drallscheibe 33 in den zweiten Bereich der Aufbereitungskammer 32', in dem sich die Druckzerstäuberdüse 9 befindet. Durch die Drallbewegung des Abgases 12' werden die teilweise verdampften Tröpfchen des Lösungsnebels 13 verwirbelt und unter das Abgas 12' gemischt. Dieses Gemisch tritt dann in den Verdampfer 34 ein.

In dem Gehäuse 30 ist nach dem Verdampfer 34 der Reduktionskatalysator 5 sowie ein Oxidationskatalysator 35 angeordnet, die hintereinander geschaltet sind. Außerdem ist in dem Gehäuse 30 ein Schalldämpfer 36 integriert, der als trichterförmiges Ausgangsrohr 37 ausgebildet ist. Vor der Vermischung des Abgases 12' mit dem Harnstofflösungsnebel 13 kann auch bereits eine Schalldämmung erfolgen. Dazu wird die Aufbereitungskammer 32 mit einer schalldämmenden Einlage ausgekleidet.

Das mit Ammoniak und $CO_2$ gemischte Abgas 12' gelangt vom Verdampfer 34 in den SCR-Katalysator 5, in dem das $NO_x$ in bekannter Weise reduziert wird.

Um die Betriebsfähigkeit des beschriebenen $NO_x$-Reduktionssystems sicherzustellen, ist es notwendig, den SCR-Katalysator 5 von überschüssigem Ammoniak freizuhalten. Hierzu ist eine Regelung 15 (Fig. 1) vorgesehen, die ein Magnetventil 16 für eine gesteuerte Dosierung der Harnstofflösungszufuhr in Abhängigkeit nicht nur der Motordrehzahl n, sondern auch der Motorlast regelt. Damit wird die Harnstoffzufuhr entsprechend dem Bedarf, d. h. dem jeweiligen $NO_x$-Gehalt im Abgas, dosiert, so daß das durch Hydrolyse freigesetzte Ammoniak im Reduktionsprozeß vollständig aufgebraucht wird. Der Regelvorgang wird ferner durch die Signale von zwei Temperatursensoren 17 und 18 beeinflußt, die die Abgastemperatur im Bereich der Schadstoffumwandlung überwachen. Signalisiert eines der Temperatursensoren 17, 18 eine Temperatur unterhalb eines vorgegebenen Wertes, unterhalb dem keine vollständige Umwandlung des Harnstofflösungsnebels in Ammoniak möglich ist, wird die Zufuhr von Harnstofflösung 6 unterbunden, bis im Abgassystem wieder die erforderliche Temperatur herrscht.

Eine weitere Maßnahme, die den einwandfreien Betrieb des Systems unterstützt, ist die Beschichtung der Wandung der Aufbereitungskammer 32, 32', die mit der Harnstofflösung in Berührung kommt, mit einem Material, das durch Wärmeleitung und mittels einer Aktivkomponente entsprechend dem Anspruch 12 das Ansetzen von Harnstoffkristallen durch deren rechtzeitige Verdampfung und Hydrolyse verhindert. Ferner können auch Wärmeisoliermaßnahmen am Gehäuse 30 sowie Heizmöglichkeiten der Sprühdüse 9 und/oder anderen Bauteilen zugeordnet werden. Eine Beheizung der Emulgierleitung 10 und der Druckzerstäuberdüse 9 verhindert, daß kleine Harnstoffkristalle sich insbesondere in der Düse festsetzen.

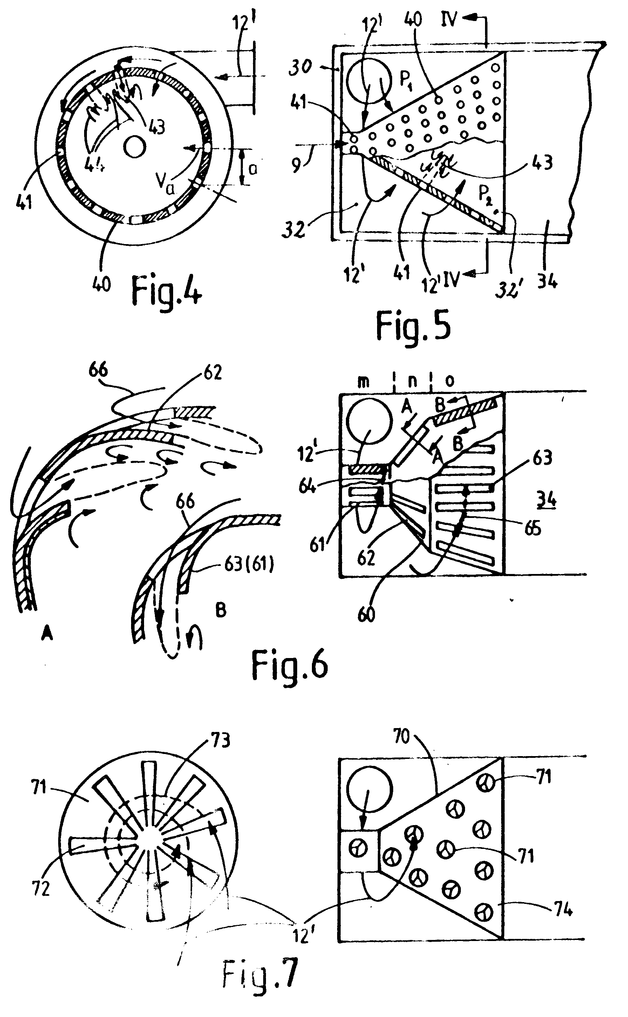

In Fig. 4 und 5 ist eine weitere Ausgestaltung einer Aufbereitungskammer 32, 32' mittels eines konischen Leitbleches 40, in dessen Schmalseite die Sprühdüse 9 hineinragt und um das das Abgas 12' strömt. Das Leitblech 40 weist eine Vielzahl von Bohrungen 41 auf, durch die das Abgas 12' hindurchströmt. Zwischen dem äußeren und inneren Bereich des Leitbleches 40 besteht eine Druckdifferenz $\Delta p = p_1 - p_2$, die eine Abgasteilstrahlgeschwindigkeit Va bewirkt. Die einzelnen Abgasstrahlen 44 stechen in den Harnstofflösungsnebel 13 ein und vermischen sich stromab. Durch Wahl der Durchmesser und des Abstandes a der Bohrungen 41 sowie der Lage der Sprühdüse 9 kann die Einmischung von Harnstofflösungsnebel in das Abgas und die Beaufschlagung des Verdampfers 34 gesteuert werden.

Eine weitere Variante dazu ist in Fig. 6 gezeigt, bei der eine etwa konische Mischeinrichtung 60 drei Reihen Leitschlitze 61 bis 63 aufweist, die jeweils auf den Umfang der Bereiche m, n, o der Mischeinrichtung 60 in der Aufbereitungskammer 32, 32' gleichmäßig verteilt sind. Durch die Leitschlitze 61 bis 63 erhält das Abgas 12' einen Drall, der im ersten Bereich m und im dritten Bereich o die Abgasteilstrahlen 64 und 65 in Richtung des Eingangsdralles verstärkt, während die Leitbleche 62 im mittleren Bereich n der Mischeinrichtung 60 eine Drallumkehrung bewirken. In Fig. 6A ist ein Querschnitt durch den mittleren Bereich n gezeigt, dessen auf den Umfang verteilte Leitschlitze bzw. Leitbleche 62 eine Strömungsumkehr der Abgasteilströme 66 verursachen. In dem ersten und letzten Bereich m bzw. o sind die nach innen gerichteten Leitbleche 63 bzw. 61 so gerichtet, daß die Abgasteilströme 67 ihre ursprüngliche Strömungsrichtung beibehalten. Durch die Drallumkehr wird eine starke Turbulenz im Bereich zwischen der Sprühdüse 9 und dem Verdampfer 34 erreicht. Durch mehrmalige Drallumkehr kann der Mischungsvorgang verstärkt werden.

Eine weitere Variante ist in Fig. 7 gezeigt, bei der eine trichterförmige Mischeinrichtung 70 in der Aufbereitungskammer 32, 32' mit zahlreichen Eintritten 71 versehen ist, die jeweils mehrere Leitbleche 72 aufweisen, die einen Drall eines eintretenden Einzelstrahles 73 verursachen. Die Leitbleche 72 sind jeweils strahlenförmig angeordnet, so daß im Innenbereich der Mischeinrichtung 70, das die Aufbereitungskammer 32' ist, eine Vielzahl kleiner Abgaswirbelströme 73 einströmt und die eine starke Turbulenz verursachen, die ebenfalls eine gute Vermischung zwischen Abgas und Harnstofflösungsnebel bewirken.

Im folgenden wird die Zersetzung der Harnstofflösung in $NH_3$ und $CO_2$ anhand von zwei Ausführungsbeispielen näher beschrieben:

Ausführungsbeispiel 1:

In einem heizbaren Quartzrohr NW 35 wurde eine mit einer Abmischung von Metalloxiden (Zusammensetzung A, Tab. 1) beschichtete Metallträgerwabe von geschlitztem Typ mit Querstromgenerierung (Fig. 2, Zellteilung 150 cpsi, Länge 43 mm) mit 18,8 ml/h Harnstoffwasserlösung (32,5 Gew.-%) aus einer verstellbaren Mikrodüse mittels Förderung durch eine Pumpe besprüht, während ein Gasgemisch von $CO_2$ (8%), HC (200 ppm $C_1$), CO (100 ppm), $SO_2$ (20

ppm), Wasserdampf (5%) über den Katalysator strömte. Die Gesamtraumgeschwindigkeit des Gasgemisches (2480 l/h) betrug 60.000 h$^{-1}$. Das Gasgemisch strömte zur Analyse durch eine auf 110°C geheizte FTIR-Langwegküvette (2 m optische Weglänge). Das FTIR-Spektrum zeigte die Bildung von $NH_3$ (2000 ppm und $CO_2$ (1000 ppm) im Molverhältnis 2 : 1 entsprechend einer vollständigen Hydrolyse des Harnstoffes nach

$$CO(NH_2)_2 + H_2O \rightarrow 2NH_3 + CO_2$$

im Temperaturbereich von 160 bis 600°C. In Dauerversuchen von je 8 h bei 200, 300 und 400°C wurde das Gasgemisch nach Verlassen des Katalysators durch einen 4°C-Kühler geleitet und das Sublimat am Kühlereintritt und das Kondensat quantitativ analysiert. Das Sublimat bestand bei allen Temperaturen aus 5 - 10 mg Harnstoff. Damit wurde ein Harnstoffumsatz von ≥ 99,97% realisiert.

Vergleichsbeispiel 1a:

Das Ausführungsbeispiel 1 wurde wiederholt. Eingesetzt wurde eine mit einer Abmischung von Metalloxiden (Zusammensetzung A, Tab. 1) beschichtete Freipassagen-Metallträgerwabe vom Standardtyp mit parallelen Kanälen mit 200 cpsi, Länge 43 mm und die Experimente zur katalytischen Harnstoffhydrolyse unter sonst gleichen Versuchsbedingungen. Auch hier wurde im Rahmen der Meßgenauigkeit des FTIR-Spektrometers ein $NH_3$/ $CO_2$-Molverhältnis von 2 : 1 beobachtet. Dagegen wurde in den Dauerversuchen ein Harnstoffschlupf beobachtet, der leicht reduzierte Harnstoffumsätze wiederspiegelte (200°: 96,8%, 300° : 98,4%, 400° : 99,6%).

Vergleichsbeispiel 1b:

Das Ausführungsbeispiel 1 wurde wiederholt. Eingesetzt wurde eine unbeschichtete Freipassagen-Metallträgerwabe vom Standardtyp mit parallel verlaufenden Kanälen mit 200 cpsi Wabenteilung, Länge 43 mm. Das FTIR-Spektrum zeigt zusätzlich zu den Gasen $NH_3$ und $CO_2$ das Auftreten von HNCO. Der Harnstoffumsatz ging massiv zurück (200° : 68%, 300° : 79%, 400° : 83%).

Ausführungsbeispiele 2 - 6:

Der im Beispiel 1 beschriebene Versuch wurde unter sonst gleichen Bedingungen mit den Beschichtungen der Zusammensetzung B - E (Tab. 1) wiederholt. In allen Fällen wurde ein Harnstoffumsatz ≥ 99,95% gemessen.

Ausführungsbeispiele 7 - 11:

In einer weiteren Versuchsreihe wurde unter sonst gleichen Bedingungen (Versuche 1 - 6) dem Feedgasgemisch 2000 ppm NO zudosiert. Während bei den Katalysatoren mit den Beschichtungen A - C (Beispiele 7 - 9) eine $NO_x$-Reduktion von maximal 10% festgestellt wurde, zeigten die Katalysatoren mit den Beschichtungen D und E (Beispiele 10 und 11) eine temperaturabhängige NO-Reduktion zwischen 15% (300°C) und 35% (500°C).

Ausführungsbeispiel 12:

Zur Abgaserzeugung diente ein 12 l Sechszylinder-Dieselmotor mit verbrauchsoptimierter Einstellung mit einem Dieselkraftstoff, der einen Schwefelmassenanteil von 0,045% hatte. Motoröl: handelsüblich. Der Motor wurde im 13-Stufentest nach 88/77/EWG betrieben. Versuchsziel war die Verminderung der limitierten Schadstoffe von 11 g $NO_x$/kWh, 3,5 g CO/kWh und 1,1 g HC/kWh um jeweils mindestens 70%. Als Reduktionsmittel wurde eine 32,5%ige Harnstofflösung mit der in Fig. 1 gezeigten Vorrichtung zur $NO_x$-Reduktion aufgesprüht. Folgende Teile wurden eingesetzt:

1) Verdampfer 34, RG 90.000 h$^{-1}$; Aktivkomponente: Metalloxidabmischung mit Zusammensetzung A (Tab 1). Träger: Metallwabe 150 cpsi Zellteilung nach Fig 2.
2) SCR-Katalysator 5, RG 30.000 h$^{-1}$; Aktivkomponente: $V_2O_5$/ $WO_3$/ $TiO_2$ auf Metallwabe 200 cpsi Zellteilung.
3) Oxidationskatalysator 35, RG 90.000 h$^{-1}$; Aktivkomponente: Platin auf promotiertem und stabilisiertem $Al_2O_3$ auf Metallwabe 200 cpsi.

Als Ergebnis der Abgasnachbehandlung wurde gefunden: 3,2 g $NO_x$/kWh (-71%), 0,9 g CO/kWh (-74%), 0,22 g HC/kWh (-80%). Die Extraktion der Partikel mit heißem $H_2O$/Isopropanol und die gravimetrische Bestimmung des Harnstoffs nach der Xanthydrolmethode zeigte einen Harnstoffschlupf von 2 mg/kWh. Dieser geringe Wert zeigt, daß der Harnstoffschlupf keine meßbare Erhöhung der Partikelmasse verursachen kann. Im Bereich des Katalysatoreintritts waren keine Ablagerungen von Harnstoff oder Harnstoffumsetzungsprodukten auffindbar. Die Eindüsung des Reduktionsmittels Harnstoffwasser erfolgte oberhalb einer Mindestabgastemperatur (17, 18) von 250°C, mit der für einen $NO_x$-Abbau von 75% äquivalenten Harnstoffwasser-Menge.

Ausführungsbeispiel 13:

Der im Beispiel 12 beschriebene Motorprüfstandstest wurde mit folgenden Teilen wiederholt:

1) Verdampfer 34, RG 90.000 $h^{-1}$; Aktivkomponenten nach Zusammensetzung D (Tab. 1). Träger: Metallwabe 150 cpsi Zellteilung nach Fig. 2.
2) SCR-Katalysator 5, RG 36.000 $h^{-1}$; Aktivkomponenten und Träger wie bei Beispiel 12.
3) Oxidationskatalysator wie bei Beispiel 12.

Als Ergebnis der Abgasnachbehandlung wurde gefunden: 3,2 g $NO_x$/kWh (-71%). 0,9 g CO/kWh (-74%) und 0,24 g HC/kWh (-22%). Der Harnstoffschlupf betrug 2,5 mg/kWh.

Tabelle 1

| Aktivkomponenten von Verdampfer 34 (g/l) | | | | | | |
|---|---|---|---|---|---|---|
|  | $Al_2O_3$ [1]) | $TiO_2$ [2]) | $SiO_2$ [3]) | $ZrO_2$ | H-Mordenit | H-ZSM$_5$ |
| A | 120 | -- | 40 | 10 | -- | -- |
| B | 90 | 60 | 10 | -- | -- | -- |
| C | 30 | 110 | 10 | -- | -- | -- |
| D | 70 | -- | -- | -- | 70 | -- |
| E | 70 | -- | -- | -- | -- | 70 |
| Ausführungsbeispiele A - C entsprechen dem Stand der Technik. Beispiele D und E entsprechen dem Anspruch 7. | | | | | | |

1) $\gamma$-$Al_2O_3$ (120 $m^2$/g).
2) Degussa P25, 50 $m^2$/g,
3) $SiO_2$ (170 $m^2$/g).

Herstellungsbeispiel eines Verdampfers:

Eine Metallträgerwabe (Fig. 2, 150 cpsi) $\varnothing$ 35 mm, Länge 43 mm wird durch Eintauschen in ein wässrige 25 Gew.%-Suspension von $Al_2O_3$, $SiO_2$ und $ZrO_2$ (Gewichtsverhältnis 12 : 4 : 1, Zusammensetzung A) und Ausblasen des überschüssigen Beschichtungsmaterials mit einem Überzug versehen. Es wird bei 120°C getrocknet und 5 h bei 700°C calciniert. Bei den Mischungen B - E wird analog verfahren.

## Patentansprüche

1. Vorrichtung zur katalytischen $NO_x$-Reduktion in sauerstoffhaltigen Abgasen unter Anwendung von Harnstoff, mit einem in einer Abgasleitung (2) enthaltenen Reduktionskatalysator (5) sowie einem Harnstoffbehälter (7), mit einer Zufuhreinrichtung (16, 10) für eine Harnstofflösung, die vor einem möglichen Kontakt mit dem Reduktionskatalysator (5) im Abgasstrom 12' verdampft und zu Ammoniak und $CO_2$ hydrolysiert wird, wobei der Verdampfer (34) als Strömungsmischer und Hydrolysekatalysator ausgebildet ist.

2. Vorrichtung nach Anspruch 1, dadurch gekennzeichnet, daß der Verdampfer (34) den Harnstofflösungsstrom in eine Vielzahl von Stromfäden aufteilt, die Umlenkungen, Teilungen und Zusammenführungen erfahren.

3. Vorrichtung nach einem der vorhergehenden Ansprüche, dadurch gekennzeichnet, daß der Verdampfer (34) aus Metall besteht und mit einer Vielzahl von im wesentlichen in Strömungsrichtung verlaufenden Kanälen (20) besteht, die untereinander strömungstechnisch in Verbindung (23) stehen.

4. Vorrichtung nach Anspruch 3, dadurch gekennzeichnet, daß die Kanäle (20) des Verdampfers (34) Umlenkungen (21) aufweisen und daß in den Kanalwänden (22) Durchbrüche (23) vorgesehen sind, die senkrecht zur Hauptströmungsrichtung gerichtete Teilströme zulassen.

5. Vorrichtung nach Anspruch 3 oder 4, dadurch gekennzeichnet, daß die Kanäle (20) des Verdampfers (34) sowie die Durchbrüche (23) Durchmesser im Bereich der Millimeter, insbesondere unter 2 mm, haben.

6. Vorrichtung nach einem der vorhergehenden Ansprüche, dadurch gekennzeichnet, daß der Verdampfer (34) eine offenporige Beschichtung mit feinteiligen, anorganischen Oxiden an den Kanalwänden (22) aufweist.

7. Vorrichtung nach Anspruch 6, dadurch gekennzeichnet, daß die Beschichtung des Verdampfers (34) aus einer Abmischung von Aluminiumoxid ($Al_2O_3$) mit Titandioxid ($TiO_2$), Siliziumdioxid ($SiO_2$), Zirkoniumdioxid ($ZrO_2$) und gegebenenfalls mit Trägerstoffen wie Diniobpentoxid ($Nb_2O_5$), Ditantalpentoxid ($Ta_2O_5$), Wolframtrioxid ($WO_3$) allein oder in einer Abmischung davon und/oder H-Zeolithen besteht, wobei das Gewichtsverhältnis zwischen Aluminiumoxid und den anderen Oxiden etwa von 90 : 10 bis 10 : 90 variieren kann.

8. Vorrichtung nach Anspruch 7, dadurch gekennzeichnet, daß die Beschichtung des Verdampfers (34) in einer Konzentration von 40 - 220 g/l und bevorzugt von 60 - 160 g/l Metalloxidgemisch pro Volumen des Trägers erfolgt.

9. Vorrichtung nach einem oder mehreren der vorhergehenden Ansprüche, dadurch gekennzeichnet, daß der Verdampfer (34) in Strömungsrichtung der Abgase 12" vor dem Reduktionskatalysator (5) angeordnet und gegebenenfalls auch umströmbar ist.

10. Vorrichtung nach einem oder mehreren der vorhergehenden Ansprüche, dadurch gekennzeichnet, daß in Strömungsrichtung der Abgase (12") nach dem Reduktionskatalysator (5) ein Oxidationskatalysator (35) angeordnet ist.

11. Vorrichtung nach einem oder mehreren der vorhergehenden Ansprüche, dadurch gekennzeichnet, daß in Strömungsrichtung der Abgase (12") vor dem Verdampfer (34) eine Aufbereitungskammer (32, 32') vorgesehen ist, mittels derer durch entsprechende Führung des Abgasstromes die Aufteilung des Harnstofflösungsnebels (13) vor Eintritt in den Verdampfer (34) beeinflußbar ist.

12. Vorrichtung nach einem oder mehreren der vorhergehenden Ansprüche, dadurch gekennzeichnet, daß die Teile der Wandung des Gehäuses (30), die mit der Harnstofflösung in Berührung kommen, mit einer offenporigen Beschichtung aus anorganischen Oxiden, wie diese der Verdampfer (34) hat, überzogen sind.

13. Vorrichtung nach einem oder mehreren der vorhergehenden Ansprüche, dadurch gekennzeichnet, daß das Magnetventil (16) für die Harnstofflösung in Abhängigkeit von der Last und der Drehzahl der Verbrennungsmaschine und gegebenenfalls von einem $NO_x$-Sensor geregelt ist.

## Claims

1. Device for catalytic $NO_x$ reduction in oxygen-containing exhaust gases with the application of urea, with a reducing catalytic converter (5) contained in an exhaust-gas pipe (2) and a urea reservoir (7), with a supply device (16, 10) for a urea solution which before any possible contact with the reducing catalytic converter (5) evaporates in the flow of exhaust gases 12' and hydrolyses to ammonia and $CO_2$, the evaporator (34) being designed as a flow mixer and hydrolysing catalytic converter.

2. Device according to Claim 1, characterised in that the evaporator (34) splits the flow of urea solution into a large number of stream lines which are diverted, divided and conjoined.

3. Device according to one of the foregoing Claims, characterised in that the evaporator (34) is made of metal and consists of a multiplicity of channels (20) which basically run in the direction of flow, said channels (2) being interconnected (23) with regard to said flow.

4. Device according to Claim 3, characterised in that the channels (20) of the evaporator (34) have deflectors (21) and that the channel walls (22) are provided with openings (23) enabling partial flows running perpendicular to the main flow direction.

5. Device according to Claim 3 or 4, characterised in that the channels (20) of the evaporator (34) and the openings (23) have diameters in the range of millimetres, particularly below 2 mm.

6. Device according to one of the foregoing Claims, characterised in that the evaporator (34) has an open-pore coating with fine-particle inorganic oxides on the channel walls (22).

7. Device according to Claim 6, characterised in that the coating of the evaporator (34) consists of a mixture of aluminium oxide ($Al_2O_3$) with titanium dioxide ($TiO_2$), silicon dioxide ($SiO_2$) zirconium dioxide ($ZrO_2$) and if necessary with carrier substances such as diniobium pentoxide, ditantalalum pentoxide ($Ta_2O_5$), tungsten trioxide ($WO_3$) alone or in a mixture of it and/or H zeolites, whereby the weight ratio between aluminium oxide and the other oxides may vary from about 90 : 10 to 10 : 90.

8. Device according to Claim 7, characterised in that the coating of the evaporator (34) is made in a metal-oxide mixture concentration of 40 - 220 g/l and preferably of 60 - 160 g/l per carrier volume.

9. Device according to one or several of the foregoing Claims, characterised in that in the direction of the flow of exhaust gases (12") the evaporator (34) is located upstream of the reducing catalytic converter (5) and that said exhaust gases can if necessary flow past said evaporator (34).

10. Device according to one or several of the foregoing Claims, characterised in that in the direction of the flow of exhaust gases (12") an oxidising catalytic converter (35) is fitted downstream of the reducing catalytic converter (5).

11. Device according to one or several of the foregoing Claims, characterised in that in the direction of the flow of exhaust gases (12") a reprocessing chamber (32, 32') is provided upstream of the evaporator (34), by means of which reprocessing chamber (32, 32') the splitting up of the urea solution mist (13) can, through suitable guiding of the flow of exhaust gases, be influenced before said urea solution enters the evaporator (34).

12. Device according to one or several of the foregoing Claims, characterised in that those parts of the walls of the housing (30) which come into contact with the urea solution are coated with an open-pore coating made of inorganic oxides like that of the evaporator (34).

13. Device according to one or several of the foregoing Claims, characterised in that the solenoid valve (16) for the urea solution is controlled as a function of the load and the speed of the internal combustion engine and by an NOx sensor if fitted.

## Revendications

1. Dispositif de réduction catalytique des oxydes $NO_x$ contenus dans les gaz d'échappement contenant de l'oxygène en utilisant de l'urée,
   comprenant

   un catalyseur de réduction (5) logé dans une conduite de gaz d'échappement (2) ainsi qu'un réservoir d'urée (7), une installation d'alimentation (16, 10) pour la solution d'urée, qui est vaporisée dans le flux des gaz d'échappement (12') avant un éventuel contact avec le catalyseur de réduction (5) et hydrolyse en ammoniac $NH_3$ et $CO_2$, l'évaporateur (34) étant réalisé comme mélangeur de flux et catalyseur d'hydrolyse.

2. Dispositif selon la revendication 1,
   caractérisé en ce que
   l'évaporateur (34) répartit le flux de la solution d'urée en un grand nombre de filets qui sont divisés, déviés, redivisés et réunis.

3. Dispositif selon l'une quelconque des revendications précédentes,
   caractérisé en ce que
   l'évaporateur (34) est en métal et se compose d'un grand nombre de canaux (20) dirigés essentiellement dans la direction de l'écoulement, ces canaux communiquant (23) de manière fluidique.

4. Dispositif selon la revendication 3,
   caractérisé en ce que
   les canaux (20) de l'évaporateur (34) comportent des déviations (21) et les passages (23) sont prévus dans les parois et les canaux (22) qui autorisent des flux partiels dirigés perpendiculairement à la direction principale de l'écoulement.

5. Dispositif selon les revendications 3 ou 4,
caractérisé en ce que
les canaux (20) de l'évaporateur (34) ainsi que les passages (23) ont un diamètre de l'ordre du millimètre notamment un diamètre inférieur à 2 mm.

6. Dispositif selon l'une des revendications précédentes,
caractérisé en ce que
l'évaporateur (34) présente un revêtement à pores ouverts d'oxydes minéraux finement divisés réalisés sur les parois de canaux (22).

7. Dispositif selon la revendication 6,
caractérisé en ce que
le revêtement de l'évaporateur (34) se compose d'un mélange d'oxydes d'aluminium ($Al_2O_3$) et de dioxyde de titane ($TiO_2$), de dioxyde de silicium ($SiO_2$), de dioxyde de zirconium ($ZrO_2$) et le cas échéant de matières de support telles que du pentoxyde de niobium ($Nb_2O_5$), du pentoxyde de tantale ($Ta_2O_5$), du trioxyde de tungstène ($WO_3$), pris seuls ou en mélange et/ou avec des zéolithes H, le rapport pondéral entre l'oxyde d'aluminium et les autres oxydes variant sensiblement entre 90/10 jusqu'à 10/90.

8. Dispositif selon la revendication 7,
caractérisé en ce que
le revêtement de l'évaporateur (34) se fait avec une concentration de 40-220 g/l et de préférence de 60-160 g/l d'un mélange d'oxydes métalliques par volume du support.

9. Dispositif selon l'une ou plusieurs des revendications précédentes,
caractérisé en ce que
l'évaporateur (34) se trouve en amont du catalyseur de réduction (5) selon le sens d'écoulement des gaz d'échappement (12") et le cas échéant l'évaporateur peut être balayé extérieurement par les gaz d'échappement.

10. Dispositif selon l'une ou plusieurs des revendications précédentes,
caractérisé en ce qu'
en aval du catalyseur de réduction (5) selon le sens de l'écoulement des gaz d'échappement (12") on a un catalyseur d'oxydation (35).

11. Dispositif selon l'une ou plusieurs des revendications précédentes,
caractérisé en ce que
dans le sens de l'écoulement des gaz d'échappement (12"), en amont de l'évaporateur (34), il est prévu une chambre de préparation (32, 32') à l'aide de laquelle, par un guidage approprié du flux de gaz d'échappement, on influence la répartition du brouillard de la solution d'urée (13) avant que celle-ci n'entre dans l'évaporateur (34).

12. Dispositif selon l'une ou plusieurs des revendications précédentes,
caractérisé en ce que
les parties de la paroi du boîtier (30) arrivant en contact avec la solution d'urée sont revêtues d'un revêtement à pores ouverts d'oxydes minéraux comme ceux de l'évaporateur (34).

13. Dispositif selon l'une ou plusieurs des revendications précédentes,
caractérisé en ce que
l'électrovanne (16) pour la solution d'urée est régulée en fonction de la charge et de la vitesse de rotation du moteur à combustion interne et le cas échéant à l'aide d'un capteur d'oxydes $NO_x$.

Fig.1

**Fig. 2**

Fig.4

Fig.5

Fig.6

Fig.7

13